Europäisches Patentamt

European Patent Office

Office européen des brevets

(11) Numéro de publication: **0 014 111**
**B1**

## (12) FASCICULE DE BREVET EUROPEEN

(45) Date de publication du fascicule du brevet: 01.07.87

(21) Numéro de dépôt: **80400020.6**

(22) Date de dépôt: **09.01.80**

(51) Int. Cl.⁴: **C 25 B 1/00, C 01 G 53/04**

(54) **Procédé de fabrication de composés oxhydrylés de nickel et composés ainsi obtenus.**

(30) Priorité: **09.01.79 FR 7900380**

(43) Date de publication de la demande:
**06.08.80 Bulletin 80/16**

(45) Mention de la délivrance du brevet:
**01.07.87 Bulletin 87/27**

(84) Etats contractants désignés:
**AT BE CH DE FR GB IT LU NL SE**

(56) Documents cités:
**FR-A- 844 120**
**FR-A-1 441 749**

(73) Titulaire: **SOCIETE METALLURGIQUE LE NICKEL - S.L.N.**
**Tour Maine-Montparnasse 33, avenue du Maine**
**F-75751 Paris Cedex 15 (FR)**

(72) Inventeur: **Limare, Armand**
**26, rue Levasseur**
**F-78120 Rambouillet (FR)**
Inventeur: **Maillot, François**
**11, rue du pont Colbert**
**F-78000 Versailles (FR)**

(74) Mandataire: **Ricalens, François et al**
**Service de la Propriété Industrielle du Groupe IMETAL 1, avenue Albert Einstein B.P. 106**
**F-78191 Trappes Cedex (FR)**

Courier Press, Leamington Spa, England.

EP 0 014 111 B1

**0 014 111**

## Description

La présente invention a pour objet un nouveau procédé de fabrication de composés oxhydrylés de nickel et plus particulièrement un nouveau procédé de fabrication de l'hydroxyde de nickel de haute pureté à partir d'une solution de sels dissociés de nickel. Elle a plus particulièrement trait à un sel basique de nickel de structure particulière, à la préparation électrolytique de ce dernier, à la purification de celui-ci et à la préparation d'un hydroxyde de nickel de haute pureté.

Il convient de rappeler que la préparation de composés oxydés de nickel tels que les hydroxydes, les carbonates basiques, les carbonates, les oxydes noir et vert de ce métal est particulièrement difficile et complexe. Cette complexité de la fabrication des oxydes noir et vert est bien mise en évidence dans l'article intitulé "Production of nickel oxide from ammoniacal process streams" publié dans "The Canadian Mining and Metallurgical" de mars 1970, de la page 352 à la page 362.

Par ailleurs, les carbonates basiques de nickel présentent le très grave inconvénient d'avoir une composition, et notamment une teneur en nickel, variable zu cours du temps.

Les hydroxydes de nickel proprement dits ne présentent pas ces inconvénients mais, d'une part, ils sont très difficiles à préparer lorsqu'on les désire purs et, d'autre part, lorsqu'ils sont préparés à partir de leurs sels, on ne peut en général récupérer l'anion auquel l'ion nickeleux est associé.

La difficulté à préparer l'hydroxyde de nickel pur tient en partie au caractère géiatineux de cet hydroxyde, à sa mauvaise filtrabilité et en partie à sa tendance à absorber les ions présents dans le milieu, c'est-à-dire les anions associés au nickel et les cations associés aux oxhydryles. Ces problèmes se posent quelle que soit la voie employée pour introduire les ions oxhydryles, addition d'une base ou décomposition électrolytique de l'eau; ils se posent notamment pour la technique électrolytique ayant déjà fait l'objet du brevet n° 1.441.749 déposé par la Société Le Nickel qui concerne un procédé de fabrication de l'hydrate de nickel par voie électrolytique à partir d'anodes de mattes de nickel dans un électrolyte aqueux de chlorure ou de sulfate d'un métal alcalin ou alcalino-terreux à faible densité de courant à un pH de 8 à 10, suivi d'un traitement de purification.

Le procédé décrit dans ce brevet français comporte, outre les difficultés de filtration de l'hydroxyde précipité qui nécessite un lavage important, un certain nombre d'inconvénients tels que la faible productivité des cellules d'électrolyse.

Par ailleurs, il convient de citer les travaux ayant un rapport avec la précipitation électrolytique d'oxyde de nickel, à savoir ceux de K. M. Oesterle (Zeitschrift für Elecktrochemie und angewandte physikalische Chemie 1929, 35, 505/519) et ceux cités dans le "Gmelins Handbuch der Anorganischen Chemie", Teil Al, 1967, p. 544—545 et Teil B2, 1966, p. 443. Ces documents indiquent la possibilité d'obtenir des précipités d'hydroxydes de nickel à partir de solutions aqueuses de sels de nickel à un pH acide et à une température ambiante.

C'est pourquoi un des objets de la présente invention est un sel basique de nickel facilement filtrable et aisément transformable en un hydroxyde de nickel de haute pureté.

Un but de la présente invention est de fournir un procédé de fabrication de ce sel basique.

Un autre but de la présente invention est de fournir un procédé permettant la transformation de ce sel basique en un hydroxyde de nickel de haute pureté.

Un autre but enfin est de fournir un procédé de fabrication d'hydroxyde de nickel de haute pureté à partir d'un sel de nickel dissocié avec récupération de l'anion associé, notamment lorsque ce dernier est un ion chlore.

Cet objet et ces buts, ainsi que d'autres qui apparaîtront par la suite, sont atteints au moyen d'un procédé de fabrication des composés oxhydrylés de nickel à partir d'une solution de sels nickeleux d'un acide minéral fort choisi dans le groupe constitué par les acides sulfurique, nitrique et halohydrique et leurs mélanges, comprenant l'étape suivante:

a) on soumet ladite solution d'ions nickeleux à une électrolyse, le catholyte étant maintenu à un pH compris entre 1 et 6 et à une température inférieure à 50°C et sa teneur en nickel à une valeur inférieure à environ 50 grammes par litre, caractérisé par le fait que l'on obtient un précipité de sel basique de nickel dont la granulométrie est telle que plus de 70% ont une dimension supérieure à 100 micromètres, la densité de courant à la cathode pendant l'électrolyse étant comprise entre 500 et 2 000 ampères par m2;

et caractérisé par le fait qu'il comporte en outre les étapes suivantes:

b) on récupère le précipité obtenu dans l'étape a);

c) on met le composé oxhydrylé obtenu à l'étape b) en contact avec une base choisie dans le groupe formé par les hydroxydes alcalins, l'ammoniaque et leurs mélanges.

Il convient dès à présent de signaler que le respect des conditions de pH et de température est impératif. L'invention ne peut être mise en oeuvre qu'au pH et à la température indiqués ci-dessus.

En effet, la valeur du pH influe considérablement, d'une part sur le rendement et, d'autre part, sur la filtrabilité du précipité. Ainsi, si le pH est trop basique, le procédé conduit à un précipité de composé basique de nickel difficilement filtrable tandis que lorsque le pH est trop acide, le rendement faradique de précipitation du sel basique tel que défini plus lion est très faible. C'est pourquoi le pH du catholyte est avantageusement compris entre 3 et 4. Dans les examples, on règle en général le pH aux alentours de 3,5 par adjonction au catholyte d'acide minéral, en général celui correspondant à l'anion associé à l'ion nickeleux; en peut prévoir un système asservissant l'addition d'acide au pH du catholyte.

2

# 0 014 111

Avantageusement, la température du catholyte est comprise en 15 et 35°C et de préférence entre 20 et 30°C. Il convient donc de prévoir un système de régulation de la température surtout si l'énergie dissipée dans l'électrolyte par effet joule est importante, ce qui est le cas lorsque l'on utilise une forte densité de courant.

Le potentiel électro-chimique au catholyte doit être inférieur au potentiel nécessaire pour oxyder le nickel nickeleux en nickel nickelique. Selon l'état antérieur de la technique (Atlas l'équilibre électrochimique de M. Pourbaix, édition 1963, page 331), ce dernier potentiel est exprimé par les deux relations suivantes:

$$3NiO + H_2O = Ni_3O_4 + 2H^+ + 2e^-$$

$$E_o = 0{,}897 - 0{,}059 \ pH$$

$$2NiO + H_2O = Ni_2O_3 + 2H^+ + 2e^-$$

$$E_o = 1{,}032 - 0{,}059 \ pH$$

C'est pourquoi lorsque, selon une des mises en oeuvre les plus avantageuses de l'invention, on électrolyse une solution de chlorure de nickel avec dégagement de chlore à l'anode, il est préférable de séparer le compartiment anodique du compartiment cathodique à l'aide d'au moins un diaphragme on d'au moins une membrane et/ou de maintenir le potentiel d'oxydo-réduction du catholyte à une valeur telle que le nickel nickeleux ne soit pas oxydé en nickel nickelique. De préférence, on maintient le potentiel redox du catholyte à une valeur inférieure ou égale à 400 millivolts par rapport à l'électrode au calomel saturé. Ce maintien peut être réalisé en ajoutant, lorsque le potentiel d'oxydo-réduction est trop élevé, un agent réducteur approprié comme par exemple l'eau oxygénée, l'acide ascorbique, le sulfite de sodium et le thiosulfate de sodium ou tout autre produit ayant un effet réducteur.

Le sel de nickel électrolysé est de préférence un sel d'acide minéral fort tel que l'acide sulfurique, l'acide nitrique et les acides halohydriques et leurs mélanges.

En outre, il convient d'iniquer que la concentration en ions nickel est avantageusement inférieure à 50 grammes par litre et de préférence comprise entre 10 et 30 grammes par litre.

Afin d'abaisser la consommation d'énergie électrique relative à la production du sel basique de nickel, il est préférable d'augmenter la conductivité de la solution, par exemple de manière connue en soi (cf. Gmelins, "Handbuch der Anorganischen Chemie", n° 57, Teil Al, 1967, page 544 à 545) en ajoutant un sel présentant le même anion que le sel de nickel électrolysé et dont le cation est alcalino-terreux ou de préférence alcalin et ne pourra donc ni être réduit, ni précipité sous forme d'hydroxyde ou sel basique.

Une des additions les plus simples et les moins chères est celle de sel de sodium et, dans le cas de l'électrolyse du chlorure de nickel, de chlorure de sodium.

Dans le cas où il est nécessaire de maintenir constant le volume d'électrolyte en pratiquant une purge, le sel d'addition devient une matière consommable. Il y a donc un compromis à trouver entre l'abaissement de la quantité d'énergie utilisée par unité de sel basique de nickel produit et l'augmentation de la consommation de sel de sodium. Un bon compromis consiste à réaliser l'addition de sel de sodium de manière que la concentration de ce sel soit d'environ une mole par litre (0,5 à 1,5 mole par litre).

On peut préciser que, quoiqu'il soit possible de réaliser l'électrolyse selon la présente invention à une pression différente de la pression ordinaire, il est préférable et plus aisé de la réaliser à la pression atmosphérique.

Les cathodes utilisées peuvent être par exemple en titane, en nickel ou en acier inoxydable. D'une manière générale, il est préférable de choisir des cathodes qui favorisent le dégagement d'hydrogène par rapport au dépôt de nickel métallique.

L'agitation du catholyte au voisinage de la cathode a une très grande importance. Elle ne doit être ni trop forte ni trop faible, faute de quoi le maintien du pH à la valeur indiquée ci-dessus serait difficile et consommerait trop d'acide. Il convient toutefois de remarquer que l'agitation corrélative au dégagement d'hydrogène à la cathode semble convenir parfaitement.

Lorsque les conditions indiquées ci-dessus sont remplies, le composé oxhydrylé qui est ici un sel basique de nickel, précipite en gros flocons et s'accumule au fond de la cuve d'électrolyse. C'est pourquoi il convient de modifier la forme de cette dernière de façon à donner une pente au compartiment cathodique et de placer au bas de cette pente un col de cygne afin de faciliter l'évacuation de ces flocons dont la filtration est extrémement aisée.

En ce qui concerne les paramètres réactionnels qui n'ont pas éé examinés plus haut, il faut les choisir de manière à favoriser le dégagement d'hydrogène à la cathode par rapport au dépôt de nickel métallique. Les réactions anodiques n'ont que peu d'influence sur la précipitation du composé basique dans la mesure où elles ne modifiant pas les conditions décrites plus haut.

Ainsi à l'anode peuvent se passer les réactions de dissolution des composés nickélifères qui peuvent être soit très purs, par exemple déchets d'électro-déposition de nickel (dendrites, électrodes massives mises au rebut) ou impurs. Dans ce dernier cas, il convient de séparer le compartiment anodique du compartiment cathodique et de prévoir une étape de purification de l'anolyte afin de n'envoyer dans le compartiment cathodique qu'un sel de nickel aussi pur que possible. En effet, la plupart des impuretés présentes dans les solutions nickélifères se retrouvent dans le précipité de nickel obtenu à la cathode. La précipitation selon la présente invention n'apporte que peu ou pas de purification.

3

**0 014 111**

Le sel basique de nickel préparé selon la présente invention possède des propriétés physiques et chimiques remarquables.

Il convient de signaler que son procédé de fabrication permet de transformer le chlorure de nickel en un composé oxhydrylé avec récupération de chlore.

Les dimensions des flocons indiquées ci'dessous confèrent à ces derniers la propriété de décanter facilement dans la cellule d'électrolyse et de faciliter leur traitement ultérieur.

En outre, peut'être à cause de ces caractéristiques, il est très commode de convertir ce sel basique en hydroxyde nickel pur.

L'analyse chimique montre que les quatre cinquièmes environ des atomes de nickel sont liés à des ions oxhydryles, le restant étant lié à des anions provenant de la solution.

Cette conversion du sel basique en hydroxyde, décrite à l'étape, se fait en déplaçant ces anions par des ions oxhydryles amenés par une solution d'un hydroxyde d'un métal alcalin tels que la soude caustique ou la potasse, ou même encore d'ammoniaque. La réaction est d'autant plus complète qu'elle s'effectue à une température plus élevée et avec un excès d'hydroxyde.

D'une façon générale, le composé oxhydrylé intermédiaire issu de l'étape b) peut être purifié par tout procédé mettant en jeu une quantité suffisante d'ion hydroxyle susceptible de réagir sur le sel basique.

Pour réduire la quantité de base nécessaire, on peut opérer dans au moins deux réacteurs en cascade, l'hydroxyde de nickel et la solution alcaline se déplaçant à contre courant. Cette technique permet de réduire la quantité de base nécessaire à une valeur comprise entre 1 et 1,2 fois, et le plus généralement à une valeur de 1,05 fois la quantité stoechiométrique.

Cette façon d'opérer permet de diminuer la quantité de soude utilisés. Dans le premier réacteur, le composé basique épuise la soude sortant du deuxième réacteur tandis que dans le deuxième réacteur, l'excès de soude par rapport aux impuretés restant encore à éliminer, permet de conférer au produit sortant une grande pureté.

Il est apparu que, pour que le procédé soit exploité dans les meilleures conditions, il est nécessaire de purifier sommairement le composé oxhydrylé dans le premier réacteur en l'alimentant par une solution de soude faiblement concentrée provenant du deuxième réacteur et de travailler à concentration en soude élevée dans ce deuxième réacteur pour affiner la purification.

Le temps de séjour dans chaque réacteur est conditionné par le choix de la technologie, le concentration en soude, la température et le degré de pureté souhaité pour l'hydroxyde de nickel final. Dans le premier réacteur, la température, la technologie de l'agitation et le temps de séjour doivent être choisis de manière que, d'une part, la basicité de la phase aqueuse sortant de ce réacteur soit aussi faible que possible et que, d'autre part, on ne dégrade pas la morphologie particulière du composé oxhydrylé obtenu dans l'étape b), dégradation qui entrainerait des difficultés de purification au niveau du deuxième étage. Dans le deuxième réacteur en revanche, les conditions opératoires doivent être définies en fonction du degré de pureté de l'hydroxyde de nickel final car c'est là que l'on parfait la purification du produit. En particulier un compromis doit être trouvé entre un long temps de séjour et le maintien d'une concentration élevée en soude dans le deuxième réacteur, maintien qui risque d'entraîner des consommations importantes de la base lors de la filtration de l'hydroxyde.

On maintient la température du réacteur dans lequel le composé oxhydrylé issu de b) entre en premier à une valeur qui ne doit pas dépasser 50°C et avantageusement être proche de la température ambiante (de 15 à 30°C).

La mise en suspension du composé basique doit être effectuée au moyen d'une technologie ne risquant pas de casser les grains par une agitation trop violente.

La température du réacteur dans lequel la base est introduite en premier sera avantageusement supérieure à 50°C et de préférence comprise entre 70 et 90°C. La concentration en base dans ce réacteur est avantageusement au moins égale à un et de préférence comprise entre 1,5 et 5 équivalents-grammes par litre.

La technologie de l'agitation est avantageusement choisie de manière à éviter toute fragmentation des grains d'hydroxyde de nickel susceptible de rendre difficiles les opérations de lavage ultérieures.

A ce stade du procédé, la solution d'imprégnation est de préférence éliminée par lavage à l'eau sur filtre ou par repulpage. Une température de 40 à 60°C est bien appropriée.

Environ trois opérations de repulpage volume à volume sont alors préférables si l'ensemble du procédé a été mis en oeuvre dans les conditions citées ci-dessus.

S'il est convenablement traité, le composé oxhydrylé de nickel est alors un hydroxyde de nickel. La pureté de cet hydroxyde dépend, d'une part, de la pureté du sel dissocié employé et, d'autre part, du traitement du composé oxhydrylé intermédiaire provenant de l'étape b).

Ainsi, on traitant, ainsi que cela est décrit ci-dessus, un composé oxhydrylé obtenu à partir de solutions de chlorure de nickel de haute pureté telles que celles qui sont obtenues par les procédés décrits dans les brevets français 2.138.330, 2.138.332. 2.297.925 et 2.334.756, et après trois opérations de repulpage dans l'eau, on obtient un hydroxyde de nickel dont la teneur en impuretés, c'est'à-dire en éléments autres que le nickel, l'oxygène et l'hydrogène, est au plus de 0,5% en poids.

Au cours de l'étude qui a conduit à la présente invention, on a pu montrer qu'un traitement thermique consistant à chauffer à une température comprise entre 80 et 180°C, et de préférence entre 100 et 150°C,

4

jusqu'à poids constant le composé oxhydrylé obtenu après le premier lavage à l'eau permettait d'accroître encore la pureté (au plus 0,2% d'impuretés).

Si une plus grande pureté est désirée, on peut augmenter le nombre de relavages et utiliser comme base de l'ammoniaque. Après séchage, éventuellement sous vide, à relativement haute température (80 à 180°C), cette dernière technique permet d'obtenir des teneurs en impuretés inférieures à 0,1%, voire inférieures à 0,05%.

L'hydroxyde ainsi obtenu, une fois filtré et séché, peut être utilisé tel quel. Il satisfait très bien les besoins en nickel de l'industrie chimique, en particulier dans le domaine de la fabrication des accumulateurs et de la synthèse de certains sels. De plus, il peut, dans la plupart de leurs emplois, remplacer l'oxyde vert et l'oxyde noir de nickel, en particulier dans les secteurs de la verrerie, des émaux, de la céramique, de la fabrication des ferrites et dans la parachimie.

L'hydroxyde de nickel obtenu selon le procédé de la présente invention peut également être transformé très aisément en oxyde noir ou vert. L'oxyde noir est obtenu par simple chauffage à une température supérieure à 300°C, de préférence aux environs de 400 à 500°C (un seul chiffre significatif). L'oxyde vert peut être aisément obtenu à partir de cet hydroxyde en le chauffant à une température de 1 100°C environ (deux chiffres significatifs).

Les exemples non limitatifs suivants ont pour but de mettre les spécialistes à même de déterminer aisément les conditions opératoires qui conviennent totalement dans chaque cas particulier.

Les exemples ci-dessous ont été réalisés dans une cellule d'électrolyse à fond conique équipée d'un col de cygne, d'une pompe permettant de récupérer le précipité à travers le col de cygne sous forme de pulpe, un décanteur et un appareil de séparation liquide-solide ainsi qu'un appareil de refroidissement permettant la régulation de la température à la valeur désirée. C'est cet appareillage de régulation de la température qui fixe le débit de la pulpe. Les différents paramètres de la solution sont maintenus à la valeur désirée par un dispositif d'asservissement, la valeur du pH étant régulée par addition d'acide chlorhydrique, celle du potentiel redox par addition de thiosulfate de sodium, la concentration en nickel par addition d'une solution de chlorure de nickel dont la composition est identique à celle obtenue avant électrolyse dans l'exemple 9 du brevet français n° 2.334.756. Les caractéristiques essentielles de cette cellule d'électrolyse sont résumés dans le tableau ci-après.

| | |
|---|---|
| Nature anode | Graphite |
| Surface anode | 0,8 dm$^2$ |
| Surface diaphragme anodique | 1 dm$^2$ |
| Sortie gaz anodique | Aspiration |
| Volume anolyte | 120 ml |
| Nature cathode | Nickel |
| Surface cathodique | 0,6 dm$^2$ |
| Sortie gaz cathodique | Ventilation forte |
| Volume de catholyte circulant | 12 litres |
| Température catholyte | Cf exemples |
| Débit circulation du catholyte | 120 l/h |
| Concentration nickel du catholyte | Cf exemples |
| Potentiel du catholyte par rapport à l'électrode au calomel saturé | 340—430 mV |
| Densité de courant cathodique | Cf exemples |
| Distance entre axe anode cathode | 9 cm |
| Distance entre surface anode cathode | 6 cm |
| Section cellule complète | 175 cm$^2$ |
| Section décanteur annexe | 130 cm$^2$ |
| Volume fonds de cellule | 4 litres |
| Angle du cône de fond cellule (cône) | 40° |
| Vitesse ascensionnelle dans le décanteur | 0,25 cm/sec |
| Intensité débitée | Cf exemples |
| Tension aux bornes de la cellule | Cf exemples |
| Diaphragme en toile polyester dont la perméabilité à l'air, sous une pression de 20 mm d'eau, est | 80 m/h |
| Réglage du potentiel électro-chimique de la solution per une solution de thiosulfate à | 100 g/l |

Les pourcentages indiqués ci-après pour les analyses sont des pourcentages de poids.

5

Exemple 1

Dans l'appareillage décrit ci-dessus, on électrolyse une solution de chlorure de nickel correspondant à la pureté de celle de l'exemple 9 du brevet n° 2.334.756 dans les conditions suivantes:

— concentration en ions nickeleux maintenue constante: 30 g/l
— température de l'électrolyte: 20°C
— densité du courant cathodique: 625 A/m²
— acidité maintenue à pH 3
— différence de potentiel entre les électrodes: E=10 V.

L'analyse chimique du précipité sec montre l'absence de nickel métallique (Ni:52%; Cl:10%; H+0: complément à 100%). Le rendement faradique (égal au nombre d'équivalents nickel contenus dans le précipité sec sur la quantité d'électricité correspondante exprimée en faradays) est de 75%.

Exemple 2

Dans l'appareillage décrit ci-dessus, on électrolyse une solution de chlorure de nickel correspondant à la pureté de celle de l'exemple 9 du brevet n° 2.334.756 dans les conditions suivantes:

— concentration en ions nickeleux maintenue constante: 30 g/l
— température de l'électrolyte: 50°C
— densité du courant cathodique: 625 A/m²
— acidité maintenue à pH3
— différence de potentiel entre les électrodes: E=7,6 V.

L'examen visuel et l'analyse du précipité sec (Ni=71,7%) montrent que le nickel y est présent à l'état nickeleux et métallique. On peut en conclure que la température trop élevée a favorisé la réduction des ions nickeleux en nickel métallique.

Compte tenu du fait que le nickel est partiellement précipité sous forme métallique, le rendement faradique de précipitation ne présent pas d'intérêt et n'a pas été calculé.

Exemple 3: Influence de la densité de courant

Dans l'appareillage décrit ci-dessus, on électrolyse une solution de chlorure de nickel correspondant à la pureté de celle de l'exemple 9 du brevet n° 2.334.756 dans les conditions suivantes:

— concentration en ions nickeleux maintenue constante: 30 g/l
— température de l'électrolyte: 51°C
— densité du courant cathodique: 1 200 A/m²
— acidité maintenue à pH 3
— différence de potentiel entre les électrodes: E=12,8 V.

L'examen visuel et l'analyse chimique du précipité sec (Ni=68,7%) montrent que le nickel y est présent à l'état nickeleux et métallique. Toutefois la proportion de nickel métallique a initialement diminué, ce qui montre qu'en accroissant la densité de courant on favorise la précipitation des ions nickeleux sous forme d'hydroxyde par rapport à leur réduction à l'état métallique.

Exemple 4

Dans l'appareillage décrit ci-dessus, on électrolyse une solution de chlorure de nickel contenant du chlorure et du sulfate de sodium. Celle solution a la pureté de celle de l'exemple 9 du brevet n° 2.334.756. Les conditions opératoires sont les suivantes:

— concentration en ions nickeleux maintenue constante: 18,2 g/l
— température de l'électrolyte: 30°C
— densité du courant cathodique: 750 A/m²
— acidité maintenue à pH 3,5
— différence de potentiel entre les électrodes: E=8,4 V.
— concentration en ions sodium: 30 g/l
— concentration en ions sulfate: 8,9 g/l
— concentration en ions chlorure: 61,7 g/l

L'analyse chimique du précipité sec donnent les résultats suivants:
nickel:51,9%; soufre:4,1%; chlore:8,2% soidum:1,8%; hydrogène+oxygène: complément à 100%. Le sodium est présent dans le précipité à une teneur correspondant à celle qui est due aux eaux-mères d'imprégnation. La granulométrie médiane est de 175 microns. Le rendement faradique de précipitation est de 72,2%. La vitesse de décantation des flocons est égale à 0,4 centimètre per seconde. On a utilisé au cours de cette expérience 21 grammes de réducteur ($Na_2S_2O_3$) par kilogramme de nickel précipité.

# 0 014 111

Exemple 5

Dans l'appareillage décrit ci-dessus, on électrolyse une solution de chlorure de nickel contenant du chlorure et du sulfate de sodium. Cette solution a la pureté de celle de l'exemple 9 du brevet n° 2.334.756. Les conditions opératoires sont les suivantes:

— concentration en ions nickeleux maintenue constante: 28,4 g/l
— température de l'électrolyte inférieure ou égale à 30°C
— densité du courant cathodique: 700 A/m²
— acidité maintenue entre 3 et 5
— différence de potentiel entre les électrodes: E=7,1 V.
— concentration en ions sodium: 22 g/l
— concentration en ions sulfate: 15,3 g/l
— concentration en ions chlorure: 58,5 g/l

L'analyse chimique du précipité sec donnent les résultats suivants:
nickel:51%; soufre:4,7%; chlore:5,4% sodium:1,5%; hydrogène+oxygène: complément à 100%.

Le sodium est présent dans le precipité à une teneur correspondant à celle qui est due aux eaux-mères d'imprégnation. La granulométrie médiane est de 125 microns. Le rendement faradique de précipitation est de 72%. La vitesse de décantation des flocons est égale à 0,3 centimètre par seconde. On a utilisé au cours de cette expérience 16 grammes de réducteur ($Na_2S_2O_3$) par kilogramme de nickel précipité. La consommation d'acide chlorhydrique nécessaire pour le maintien du pH a été égale à 0,68 kilogramme d'acide chlorhydrique par kilogramme de nickel précipité.

Exemple 6

Dans l'appareillage décrit ci-dessus, on électrolyse une solution de chlorure de nickel contenant du chlorure de du sulfate de sodium. Cette solution a la pureté de la solution de chlorure de nickel de l'exemple 9 du brevet n° 2.334.756. Les conditions opératoires sont les suivantes:

— concentration en ions nickeleux maintenue constante: 17,3 g/l
— température de l'électrolyte inférieure ou égale à 30°C
— densité du courant cathodique: 1 000 A/m² acidité maintenue à pH 3,5
— différence de potentiel entre les électrodes: E=6,7 V
— concentration en ions sodium: 43 g/l
— concentration en ions sulfate: 12,7 g/l
— concentration en ions chlorure: 83 g/l

L'analyse chimique du précipité sec donne les résultats suivants:
nickel:51,1%; soufre:3,2%; chlore:9,2% sodium:2,1%; hydrogène+oxygène: complément à 100%.

Le sodium est présent dans le précipité à une teneur correspondant à celle qui est due aux eaux-mères d'imprégnation. Le rendement faradique de précipitation est de 60,3%. On a utilisé au cours de cette expérience 110 grammes de réducteur ($Na_2S_2O_3$) par kilogramme de nickel. Le consommation d'acide chlorhydrique nécessaire pour le maintien du pH a été égale à 0,68 kilogramme d'acide chlorhydrique par kilogramme de nickel précipité.

Ces résultats s'expliquent sans doute par une plus grande diffusion de l'anolyte vers le catholyte. Ceci toutefois n'a pas d'influence sur la quantité du précipité.

Exemple 7

Un produit provenant de l'électrolyse d'une solution de chlorure de nickel additionné de chlorure et de sulfate de sodium dont la composition chimique est la suivante:
Ni=51%; S=3,2%; Cl=9,5%
est traité par une solution de soude suivant le mode opératoire suivant:

Mise en suspension dans de l'eau à 70°C pendant 15 à 30 minutes à raison de 10 litres par kilogramme de nickel contenu; de la anode 10 N est ajoutée de façon à maintenir une concentration en hydroxyde alcalin supérieure à 0,5 N.

La suspension est filtrée et le produit est à nouveau mis en suspension dans les mêmes conditions, la concentration en soude étant maintenue alors supérieure à 2,5 N.

Après filtration, le produit est mis en suspension dans de l'eau à 60°C pendant 15 minutes; la pulpe est ensuite filtrée. La vitesse de filtration est de 600 litres par heure et par mètre carré de surface filtrante.

Le gâteau est alors soumis à un traitement thermique à 120°C (séchage à poids constant). Puis les impuretés résiduelles (sels de sodium) sont éliminées par deux traitements à l'eau identiques au précédent.

Le produit est enfin séché à poids constant; son analyse chimique est la suivante:
Ni:62%; S:0,05%; Cl:0,09%; Na:0,01%.
La granulométrie médiane est de 100 microns.

Dans cet exemple, le produit a été soumis au traitement thermique décrit ci-dessus de façon à accroître la pureté de l'hydroxyde final.

7

# 0 014 111

Exemple 8

Un produit provenant de l'électrolyse d'une solution de chlorure de nickel additionné de chlorure et de sulfate de sodium est traité suivant la technique utilisant deux réacteurs en cascade décrite ci-dessus, où le produit et la base circulent à contre-courant dans les deux réacteurs.

La quantité de soude introduite sous forme de solution concentrée à 200 g/l est en excès de 10% par rapport aux impuretés (ions chlorure et sulfate) à éliminer.

La température du premier réacteur est de 40°C. Le temps de séjour du produit de 1 h 30 environ.

Dans le deuxième réacteur, la température est de 75°C et le temps de séjour du produit de 2 h 30 environ.

Le produit issu du deuxième réacteur est ensuite lavé par de l'eau chaude à 70°C trois fois de suite à raison de 10 litres d'eau par kilogramme de nickel contenu, puis séché.

Son analyse chimique est la suivante:

Ni:60%; S:0,08%; Cl:0,21%; Na:0,045%.

La pureté peut être amélioré par un traitement thermique identique à celui de l'exemple précédent avant les deux derniers lavages à l'eau. L'analyse est alors la suivante:

Ni:62%; S: 0,04%; Cl:0,08%; Na:0,020%.

Exemple 9

Une solution de chlorure de nickel d'une concentration en ion nickeleux de 30 g/l est électrolysée à 20°C, avec une densité de courant de 1 500 A/m².

On réalise trois essais successifs en faisant varier le pH du catholyte. Les résultats obtenus sont résumés dans le tableau.

| pH | Rendement faradique de précipitation | Consommation HCl en kg/kg nickel précip. |
|-----|-----|-----|
| 2,2 | 52% | 0,446 |
| 2,8 | 68% | 0,390 |
| 3,2 | 88% | 0,218 |

Le produit recueilli décante et filtre facilement.

Ces essais montrent que le rendement faradique de précipitation sers d'autant meilleur et la consommation d'acide chlorhydrique d'autant plus faible que le pH sera plus élevé. D'autres facteurs comme par exemple la température, la densité de courant, l'agitation, la composition de l'électrolyte doivent avoir une influence sur le rendement de précipitation mais nous avons exposé les raisons qui nous empêchent de les modifier pour augmenter encore le rendement.

Un essai dans des conditions identiques mais à pH 6,5 a conduit à hydrolyser le chlorure de nickel en donnant un oxyhydrate de nickel constitué de particules extrêmement fines ne pouvant pas décanter et très difficile à filtrer, les toiles filtrantes laissant passer le solide ou bien se colmatant.

Dans le cas de l'électrolyse du chlorure de nickel, il faut remarquer que l'oxydation des composés oxhydrylés du nickel par le chlore est favorisée à un pH supérieur à 3.

Le pH optimum de l'électrolyse est donc voisin de 3.

## Revendications

1. Procédé de fabrication des composés oxhydrylés de nickel à partir d'une solution de sels nickeleux d'un acide minéral fort choisi dans le groupe constitué par les acides sulfurique, nitrique et halohydrique et leurs mélanges, comprenant l'étape suivante:

a) on soumet ladite solution d'ions nickeleux à une électrolyse, le catholyte étant maintenu à un pH compris entre 1 et 6 et à une température inférieure à 50°C et sa teneur en nickel à une valeur inférieure à environ 50 grammes par litre, caractérisé par le fait que l'on obtient un précipité de sel basique de nickel dont la granulométrie est telle que plus de 70% ont une dimension supérieure à 100 micromètres, la densité de courant à la cathode pendant l'électrolyse étant comprise entre 500 et 2 000 ampères par m2;

et caractérisé par le fait qu'il comporte en outre les étapes suivantes:

b) on récupère le précipité obtenu dans l'étape a);

c) on met le composé oxhydrylé obtenu à l'étape b) en contact avec une base choisie dans le groupe formé par les hydroxydes alcalins, l'ammoniaque et leurs mélanges.

2. Procédé selon la revendication 1, caractérisé par le fait que l'on maintient le catholyte à un pH compris entre 3 et 4.

3. Procédé selon la revendication 2, caractérisé par le fait que l'on maintienne le catholite à une valeur d'environ 3,5.

8

4. Procédé selon les revendications 1 à 3 prises séparément, caractérisé par le fait que l'on maintient la température du catholyte entre 15 et 35°C.

5. Procédé selon les revendications 1 à 4 prises séparément, caractérisé par le fait que l'on maintient la concentration en nickel du catholyte à une valeur comprise entre 10 et 30 grammes par litre.

6. Procédé selon les revendications 1 à 5 prises séparément, caractérisé par le fait que l'on maintient le potentiel d'oxydo-réduction du catholyte à une valeur telle que le nickel nickeleux ne soit pas oxydé en nickel nickelique.

7. Procédé selon les revendications 1 à 6 prises séparément, caractérisé par le fait que le catholyte contient en outre un sel alcalin ou alcalino-terreux ayant le même anion que l'ion nickeleux.

8. Procédé selon les revendications 1 à 7 prises séparément, caractérisé par le fait que l'on récupère le composé oxhydrylé par une méthode choisie dans le groupe formé par la filtration, la décantation, la centrifugation et le cyclonage.

9. Procédé selon les revendications 1 à 8 prises séparément, caractérisé par le fait que la quantité de base mise en jeu est comprise entre 1 et 1,2 fois la quantité stoechiométrique nécessaire pour déplacer les anions résiduels contenus dans le composé oxhydrylé obtenu à l'étape b).

10. Procédé selon les revendications 1à 9 prises séparément, caractérisé par le fait que la mise en contact c) est réalisée à contre-courant dans au moins deux réacteurs.

11. Procédé selon la revendication 10, caractérisé par le fait que l'on maintient le réacteur dans lequel le composé oxhydrylé issu de b) pénètre en premier à une température comprise entre 15 et 30°C.

12. Procédé selon les revendications 10 et 11 prises séparément, caractérisé par le fait que l'on maintient le réacteur dans lequel la base pénètre en premier à une température comprise entre 70 et 90°C.

13. Procédé selon les revendications 1 à 12 prises séparément, caractérisé par le fait que l'addition de ladite base est réalisée de manière que la phase aqueuse du réacteur dans lequel la base est introduite en premier présente une concentration en ions oxhydrylés au moins égale à 1 équivalent-gramme par litre.

14. Procédé selon la revendication 10, caractérisé par le fait que l'addition de ladite base est réalisée de manière que la phase aqueuse du réacteur dans lequel la base est introduite en premier présente une concentration en ions oxhydrylés au plus égale à 5 équivalent-grammes par litre.

## Patentansprüche

1. Verfahren zur Herstellung von Nickelhydroxiden, ausgehend von einer Lösung von Nickel(II)-salzen einer starken, unter Schwefelsäure, Salpetersäure und Halogenwasserstoffsäuren und ihren Gemischen, ausgewählten anorganischen Säure, mit der folgenden Stufe:

a) Elektrolyse der Nickel(II)-ionenlösung, wobei der Katholyt auf einem pH-Wert zwischen 1 und 6 und einer Temperatur unter 50°C gehalten wird und einen Nickelgehalt unter etwa 50 g/l hat, dadurch gekennzeichnet, daß ein Niederschlag von basischen Nickelsalzen mit einer solchen Teilchengröße erhalten wird, über 70% der Teilchen eine Größe über 100 μm haben, eine Stromdichte an der Kathode während der Elektrolyse von 500 bis 2000 A/m² angewandt wird und außerdem folgende Stufen durchgeführt werden:

b) Gewinnen des in Stufe a) erhaltenen Niederschlags und

c) Inkontaktbringen des in Stufe b) erhaltenen Hydroxids mit einer unter Alkalihydroxiden und/oder Ammoniak ausgewählten Base.

2. Verfahren nach Anspruch 1, dadurch gekennzeichnet, daß der pH-Wert des Katholyts zwischen 3 und 4 gehalten wird.

3. Verfahren nach Anspruch 2, dadurch gekennzeichnet, daß der pH-Wert des Katholyts auf einem pH-Wert von etwa 3,5 gehalten wird.

4. Verfahren nach einem der Ansprüche 1 bis 3, dadurch gekennzeichnet, daß die Temperatur des Katholyts zwischen 15 und 35°C gehalten wird.

5. Verfahren nach einem der Ansprüche 1 bis 4, dadurch gekennzeichnet, daß die Nickelkonzentration des Katholyts auf einem Wert zwischen 10 und 30 g/l gehalten wird.

6. Verfahren nach einem der Ansprüche 1 bis 5, gekennzeichnet, daß das Redoxpotential des Katholyts bei einem solchen Wert gehalten wird, daß das Nickel(II) nicht zu Nickel(III) oxidiert wird.

7. Verfahren nach einem der Ansprüche 1 bis 6, dadurch gekennzeichnet, daß ein Katholyt verwendet wird, der außerdem ein Alkali- oder Erdalkalisalz mit dem gleichen Anion wie das Nickel(II)-ion enthält.

8. Verfahren nach einem der Ansprüche 1 bis 7, dadurch gekennzeichnet, daß das Hydroxid durch Filtrieren, Dekantieren, Zentrifugieren oder im Zyklon gewonnen wird.

9. Verfahren nach einem der Ansprüche 1 bis 8, dadurch gekennzeichnet, daß die Base in einer Menge eingesetzt wird, die der 1- bis 1,2-fachen stöchiometrischen Menge entspricht, die notwendig ist, um die in dem in Stufe b) erhaltenen Hydroxid zurückbleibenden Anionen zu ersetzen.

10. Verfahren nach einem der Ansprüche 1 bis 9, dadurch gekennzeichnet, daß das Inkontaktbringen in Stufe c) im Gegenstrom in mindestens zwei Reaktoren durchgeführt wird.

11. Verfahren nach Anspruch 10, dadurch gekennzeichnet, daß der Reaktor, in den das aus Stufe b) erhaltene Hydroxid zuerst eingebracht wird, auf einer Temperatur zwischen 15 und 30°C gehalten wird.

12. Verfahren nach Anspruch 10 oder 11, dadurch gekennzeichnet, daß der Reaktor, in den die Base zuerst eingebracht wird, auf einer Temperatur zwischen 70 und 90°C gehalten wird.

9

13. Verfahren nach einem der Ansprüche 1 bis 12, dadurch gekennzeichnet, daß die Zugabe der Base so durchgeführt wird, daß die wäßrige Phase des Reaktors, in den die Base zuerst eingeführt wird, eine Hydroxylionenkonzentration von mindestens 1 g-Äquivalent/l aufweist.

14. Verfahren nach Anspruch 10, dadurch gekennzeichnet, daß die Zugabe der Base so durchgeführt wird, daß die wäßrige Phase des Reaktors, in den die Base zuerst eingeführt wird, eine Hydroxylionenkonzentration von höchstens 5 g-Äquivalent/l aufweist.

**Claims**

1. Process for the manufacture of hydroxylated compounds of nickel from a solution of nickelous salts from a strong mineral acid selected from a group consisting of sulphuric, nitric and hydrohalic acids and mixtures of these, comprising the following phase:

a) the said solution of nickelous ions is subjected to electrolysis, the catholyte being maintained at a pH of between 1 and 6 and at a temperature below 50°C and its nickel content at a value less than approximately 50 grammes per litre, characterised by the fact that a deposit of basic nickel salt is obtained, the granulometry of which is such that more than 70% has a dimension greater than 100 micrometres, the current density at the cathode during electrolysis being between 500 and 2000 amperes per m2; and characterised by the fact that it comprises in addition the following phases:

b) the deposit obtained in phase a) is recovered;

c) the hydroxylated compound obtained in phase b) is put into contact with a base chosen from a group consisting of alkaline hydroxides, liquid ammonia and mixtures of these.

2. Process according to claim 1, characterised by the fact that the catholyte is maintained at a pH of between 3 and 4.

3. Process according to claim 2, characterised by the fact that the catholyte is maintained at a value of approximately 3.5.

4. Process according to claims 1 to 3 taken separately, characterised by the fact that the temperature of the catholyte is maintained at between 15 and 35°C.

5. Process according to claims 1 to 4 taken separately, characterised by the fact that the nickel concentration of the catholyte is maintained at a value of between 10 and 30 grammes per litre.

6. Process according to claims 1 to 5 taken separately, characterised by the fact that the oxidation-reduction potential of the catholyte is maintained at a value such that the nickelous nickel is not oxidised into nickelic nickel.

7. Process according to claims 1 to 6 taken separately, characterised by the fact that the catholyte contains in addition an alkaline or alkaline-earth salt having the same anion as the nickelous ion.

8. Process according to claims 1 to 7 taken separately, characterised by the fact that the hydroxylated compound is recovered by a method selected from a group consisting of filtration, decantation, the centrifugal process and the cyclone process.

9. Process according to claims 1 to 8 taken spearately, characterised by the fact that the quantity of base applied is between 1 and 1.2 times the stoichiometric quantity needed to displace the residual anions contained in the hydroxylated compound obtained in phase b).

10. Process according to claims 1 to 9 taken separately, characterised by the fact that the putting into contact in phase c) is effected by countercurrent in at least two reactors.

11. Process according to claim 10, characterised by the fact that the reactor which the hydroxylated compound obtained in b) enters first is maintained at a temperature of between 15 and 30°C.

12. Process according to claims 10 and 11 taken separately, characterised by the fact that the reactor which the base enters first is maintained at a temperature of between 70 and 90°C.

13. Process according to claims 1 to 12 taken separately, characterised by the fact that the addition of the said base is effected in such a way that the aqueous phase of the reactor into which the base is introduced first presents a concentration in hydroxylated ions at least equal to 1 gramme-equivalent per litre.

14. Process according to claim 10, characterised by the fact that the addition of the said base is effected in such a way that the aqueous phase of the reactor into which the base is introduced first presents a concentration in hydroxylated ions at least equal to 5 grammes-equivalent per litre.